(19) **Europäisches Patentamt**

**European Patent Office**

**Office européen des brevets**

(11) **EP 1 151 345 B1**

(12) **EUROPEAN PATENT SPECIFICATION**

(45) Date of publication and mention
of the grant of the patent:
**26.04.2006 Bulletin 2006/17**

(51) Int Cl.:
***G02C 7/04*** (2006.01)

(86) International application number:
**PCT/GB2000/000445**

(21) Application number: **00902778.0**

(22) Date of filing: **11.02.2000**

(87) International publication number:
**WO 2000/048036 (17.08.2000 Gazette 2000/33)**

(54) **METHODS OF MANUFACTURING A CONTACT LENS**

VERFAHREN ZUR HERSTELLUNG EINER KONTAKTLINSE

PROCEDE DE FABRICATION D'UNE LENTILLE DE CONTACT

(84) Designated Contracting States:
**AT BE CH CY DE DK ES FI FR GB GR IE IT LI LU
MC NL PT SE**

(30) Priority: **13.02.1999 GB 9903170**

(43) Date of publication of application:
**07.11.2001 Bulletin 2001/45**

(73) Proprietor: **Contact Lens Precision Laboratories
Limited
Cambridge CB2 4HZ (GB)**

(72) Inventor: **CLAMP, John, Haldyn
Cambridge CB1 3AT (GB)**

(74) Representative: **Lipscombe, Martin John et al
Keith W Nash & Co,
Pearl Assurance House,
90-92 Regent Street
Cambridge CB2 1DP (GB)**

(56) References cited:
**EP-A- 0 503 111           EP-A- 0 742 462
EP-A- 0 742 466           US-A- 5 050 981**

**Description**

**Field of the Invention**

This invention relates to a contact lens and to a method of making a contact lens.

**Background to the Invention**

Contact lenses are generally designed to correct visual problems associated with focal power of the eye, and currently this is normally achieved by controlling the focal power of a contact lens using a selected combination of front and back surface curvatures, lens thickness and selection of lens material refractive index. In this way there is imparted to the contact lens a power appropriate to achieve some degree of correction for the optical defects of the eye of the wearer. Generally, however, the focal power cannot be fully controlled at all optical areas of the lens, resulting in the required focal power being only achieved at the central region of the useful optic area of the lens. One application of the present invention, is to control aberrations in the lens itself and of the lens eye system when the lens is in situ on the eye.

Other contact lenses, eg "aberration control" lenses, having a front aspheric surface curvature, are available eg from Lamda Polytech Limited and from Nissel Limited. However, these lenses are available only in very limited parameters (eg a soft lens of 38 % Hema) and importantly are available only with a back surface curvature specified by the manufacturer.

Other inventions also describe methods of designing and manufacturing aberration control lenses. These include US Patent 5050981 (Roffman) and EP 0503111A1 (Kashiwagi, Toyohiko). However these and similar patents cover only the basic theory of aberration controlled lens design and manufacture but do not cover the application of these theories to material behaviour during manufacture; neither do they take account of the material behaviour on eye.

**The Invention**

According to the present invention, there is provided a method of making a contact lens, comprising the steps of: calculating the shape of an aspheric curve to be imparted to the front surface of the lens in order to provide a desired focal power profile over the optic region of a monofocal or multifocal contact lens, by:-

   (a) estimating the required shape of the front surface of the lens in order to achieve an estimated shape using standard or adapted thin lens formulae;

   (b) calculating the focal power of the lens having the estimated shape, by simulating the passage of parallel, or exceptionally non parallel, incident light rays through the lens at points at incremental distances from the optical axis of the lens, in order to produce a power map of the lens:

   (c) determining the profile of the power map for the lens;

   (d) using an iterative process to estimate the necessary shape of the front surface by repeating steps (b) and (c) until the profile of the power map corresponds to the desired profile and to a desired accuracy,

wherein the contact lens is manufactured from a material which exhibits non-isotropic shape changing properties such as expansion or shrinkage, and calculating the necessary shape change function from the non-isotropic material properties of the lens, and incorporating the change in conic eccentricity of the lens surfaces where applicable, and applying the shape change function to the profile derived in step (d).

Preferably, step (b) includes simulating the passage of light through the lens eye system, including the refractive surfaces within the lens eye system such as the tear layer, cornea, aqueous humour, crystalline lens and vitreous humour.

The refractive surfaces may include a change in the optical properties of the lens eye system by such as the inclusion of optical medical devices implanted into or onto the eye.

Step (c) may include representing the desired power map as a mathematical equation or series of equations. Conveniently, the mathematical equation or series of equations are a polynomial equation or series of polynomial equations.

Preferably, step (d) comprises:

   (e) defining an initial point as a point on the front of the lens;
   (f) simulating the passage of parallel, or exceptionally non-parallel, incident light rays through the lens, taking into account the back surface geometry of the lens, at an incremented distance, adjusting the point on the front surface of the lens, either closer or further away from the back surface of the lens, to a position which allows the refracted light rays to pass through the optical axis at the position indicated by the chosen defined power map;

(g) defining a new point on the front surface of the lens at a distance incremented from the previous point;

(h) repeating stages (f) and (g) until all selected points have been calculated to cover the desired area of the lens; and

(i) using a mathematical fitting procedure, such as a polynomial curve fitting procedure, to fit a mathematical equation to the defined points.

The method may include defining the accuracy of the machining equipment and manufacturing process used to manufacture the lens and, at incremental values, relating the mathematical equation previously derived to the actual point and investigating whether the points are within the previously defined accuracy of the machining equipment and manufacturing process. The method may use a mathematical equation such as a polynomial curve of sufficient order or higher, until the profile or all of the points are defined to the required accuracy.

Where the contact lens is considered flexible, such as a soft hydrogel or silicon lens, the method includes calculating a shape change function from the difference between the back Where the contact lens is considered flexible, such as a soft hydrogel or silicon lens, the method includes calculating a shape change function from the difference between the back surface shape of the lens and the resultant shape of the back surface of the lens once in situ on the eye, and incorporating the change in conic eccentricity of the back surface of the contact lens where applicable, and applying the shape change function to the derived mathematical equation defining the front geometry of the lens.

The present invention, in its preferred form, is a great improvement as it provides a method of manufacturing a contact lens which has fully controlled power distribution at all optical parts of the lens, both in air and as part of the lens eye system when in situ on eye, and definable with any lens material and specification including any desired back surface curvature (eg spherical, aspherical or polynomial) as specified by the manufacturer or by a practitioner fitting the lens. Additionally the present invention enables the optimisation of the lens manufacturing process for producing the appropriate front surface of the lens by accounting for the accuracy of the manufacturing process and equipment. The present invention is applicable to all lens types including monofocal, multifocal, prismatic, toric lenses and combinations thereof.

Furthermore, the present invention, in its preferred form, takes into consideration the effect of shape changes in the lens due to the draping of the lens when in situ on the eye and shape changes to the lens material during manufacture.

If the contact lens contains a toric portion, whether on the back, front or both surfaces, the above process is repeated across each axis of the toric portion.

If the contact lens contains a prismatic portion or portions, step (b) is accommodated to include the offset surfaces.

Using the above-stated method, the profile of the front surface curvature for the contact lens can be determined. The lens can then be manufactured using conventional modern contact lens manufacturing techniques such as computer numerical control (CNC) lathe cutting and cast moulding.

Preferably, the contact lens according to the invention has a single, substantially uniform focal power across substantially the entire optic area of the lens, or each incremental part thereof.

For the purposes of the present specification, a lens may be considered to have a "substantially uniform" focal power across its optic area, or each incremental part thereof, if, for a typical lens, the focal power deviates by less than 1 dioptre, preferably less than 0.5 dioptres, and more preferably by less than 0.25 dioptres.

For present purposes, the optic area of the lens may be defined as that part of the surface of the lens falling within a circle, which circle is centred on the centre of the lens and which has a diameter equal to the front optic zone diameter (FOZD) of the lens. The FOZD of a lens is defined in ISO 8320-1986. In general, the FOZD is the diameter of that portion of the front surface of the lens which is intended to provide the desired optical correction to the wearer of the lens. A contact lens may be made so as to have a FOZD of any desired size. The FOZD will normally be determined primarily by the total diameter of the lens. For example, a typical rigid gas permeable (RGP) lens of single power may have a total diameter of 9.5mm, and the FOZD of such a lens will typically be in the range 6-8.5mm. An average soft lens, with a total diameter of 14mm, might typically have an FOZD in the range 8-11mm. hence a large optic area) may not enter the pupil of the wearer or is unlikely to be incident upon the retina near the fovea.

Accordingly, "substantially the entire optic area" of the lens in accordance with the invention may be around 65 % of the optic area for a lens with a large FOZD, but will preferably be at least 75 %, more preferably at least 80% and most preferably at least 90 % of the optic area for more normal lenses in accordance with the invention.

As asphericity is imparted only to the front surface (ie that surface of the contact lens further from the cornea of the wearer) for controlling focal power, the curvature of the back surface remains determinable by the manufacturer or the optician fitting the lens. In this connection, the back surface may be selected to be either spherical or aspheric for the purpose of aiding fitting to the eye.

The invention is applicable to all types of contact lens (rigid or soft), regardless of replacement frequencies, such as

a) soft disposable spherical lenses
b) soft disposable toric lenses
c) soft disposable multifocal lenses
d) soft spherical lenses
e) soft toric lenses
f) soft multifocal lenses
g) rigid gas permeable (RGP) spherical and back aspheric and polynomial lenses
h) RGP toric lenses
i) RGP bifocal lenses

When applying this invention for reducing spherical aberration in either the lens or the lens-eye system, the invention may offer the following benefits to the wearer of contact lenses:

lenses:

a) Increased all-round acuity

The wearer will be attaining the prescribed power correction; generally, contact lenses give an average power correction which is dependent on the prescribed power and lens-induced spherical aberration effects.

b) Increased visual acuity in low light conditions

In low light conditions, the pupil of the wearer expands. This allows more light through peripheral areas of the contact lens where, in conventional contact lenses, the focal power deviates from the prescribed power. This may also cause halo/flare effects. This effect is significantly reduced when the prescribed power is constant over substantially the complete optic area, as in lenses in accordance with the present invention.

c) Increased lens movement

Lens movement helps induce tear flow underneath the contact lens which leads to healthier conditions, by increasing oxygen availability for the eye. Currently, lens movement (especially lens movement caused by blinking) means that the wearer momentarily looks through areas other than the centre and therefore through incorrect power regions. Increased lens movement is permissible for lenses that have the prescribed power across the complete optic area, as the wearer will not perceive any loss of visual acuity.

d) Easier fitting for practitioners

The need to ensure absolute centring of the lens is not required as the wearer may still obtain the best visual acuity without looking directly through the exact lens centre. This will increase first time fit success, which offers a considerable commercial advantage.

## Description of Drawings

The invention is further described with reference to the accompanying drawings, in which:-

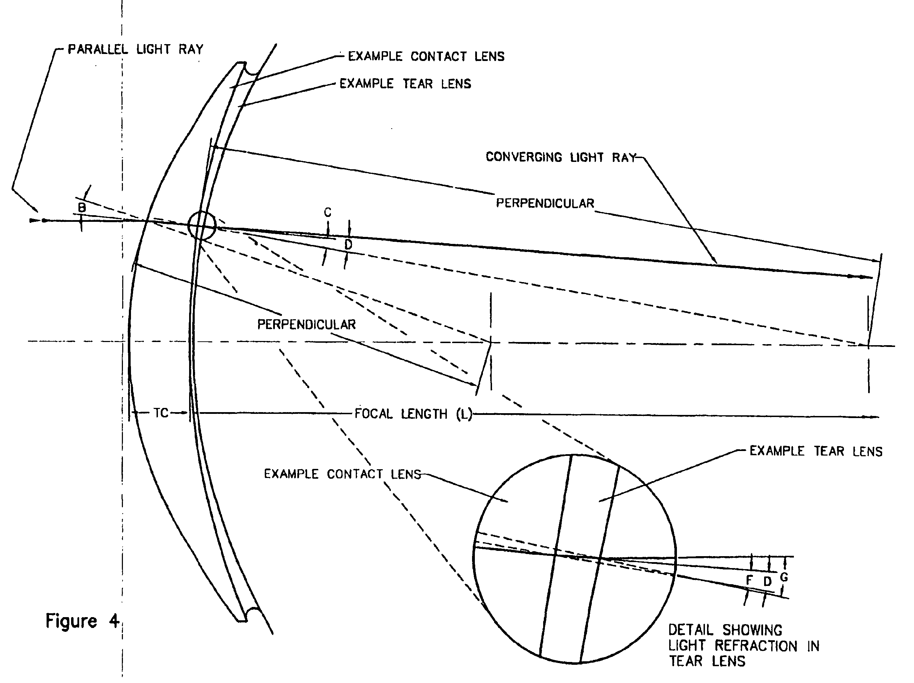

**Figures 1 to 6** are explanatory diagrams to aid understanding the method of calculating the shape of the front surface of a contact lens in order to produce substantially uniform focal power across the useful optic area or incremental parts thereof;

**Figure 7** comprises graphs showing the theoretical focal powers of lenses 1 and 2 of two pairs of lenses A and B, in each case lens 1 having an aspheric front surface modification by means of the present invention and lens 2 having a spherical front surface; and

**Figures 8A to 8D** are representations of focal power maps relating to the lens pairs A and B.

## Description of Examples

There will now be described, by way of example, a method in accordance with the invention for calculating the

aspharicity of the front surface of a contact lens.

### Example 1

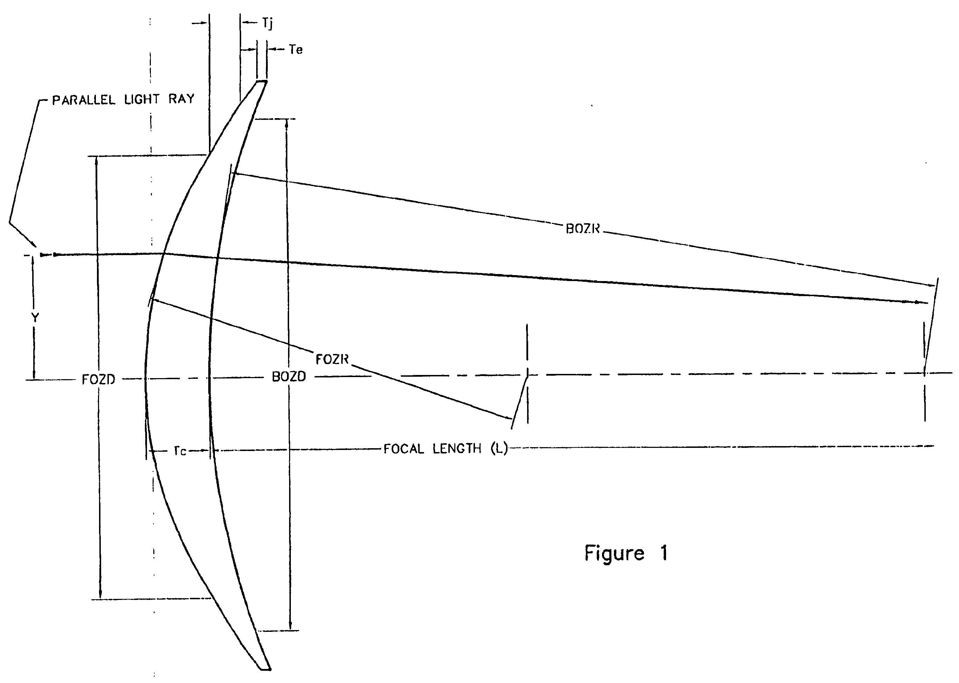

Figure 1 shows the relevant terms and definitions:-

### Focal Power Definitions

BVP   Back vertex power
L      Focal length
Y      Distance from centre of lens

### Back Surface Definitions

TD     Total diameter of the lens
BOZD   Back optic zone diameter
BOZR   Back optic zone radius
Be     Back optic zone eccentricity

### Front Surface Definitions

FOZD   Front optic zone diameter
FOZR   Front optic zone radius
Fe     Front optic zone eccentricity

### Thicknesses

Tc    Centre thickness
Tj    Junction thickness
Te    Edge thickness

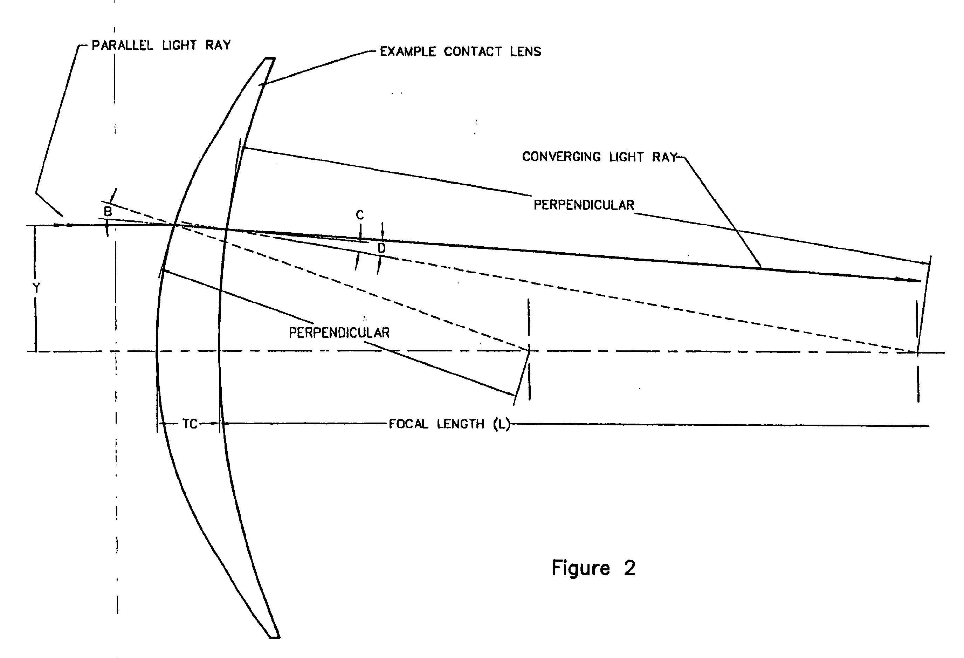

Making reference to Figure 2, the first step of the method comprises;

(a) estimating the required radius or profile of the front curvature of the lens or an incremental part thereof in order to achieve the correct prescribed focal power using standard or adapted thin lens formulae;
Function FOZR(BOZR,Tc,Ri,BVP);
var focia,focib;real;
begin

$$focia := (1\text{-}Ri)*1000/BOZR;$$

$$focib := 1000/((1000/(BVP\text{-}focia))+(Tc/Ri);$$

$$FOZR := (Ri-1)*1000/focib;$$

end;

(b) calculating the focal power of the lens by simulating the passage of parallel, or exceptionally non parallel, incident light rays through the lens at incremental distances in order to produce a power map of the lens detailing positions on the lens against the powers of the lens;

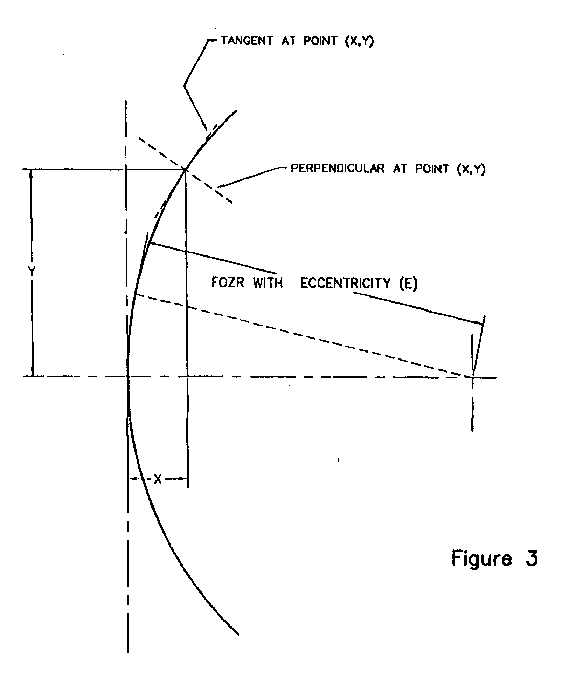

The second step of the method comprises incrementing Y from 0.00 to FOZD/2 in incremental steps.
In order to calculate passage of initial parallel light ray, the angles at which the light ray refracts from each external and internal surface are required. These angles relate to the angle between the incident light ray and the perpendicular of the surface at that point.
Making reference to Figure 3, the calculation of the perpendicular at the point of contact comprises:-
Equation for aspheric curve:

$$x = sqr(y)/(r+sqrt(sqr(r)+(a*sqr(y))));$$

where a=-(1+sqr(e))) (for calculating the back surface curve, e=Be and r=BOZR; for calculating the front surface, e=$F_e$ and r=FOZR).
To find the tangent of this curve, the above equation is differentiated with respect to y.

$$dx/dy = y*(2*z*(r+z)-(a*sqr(y))/z*sqr(r+z))$$

where z=sqrt(sqr(r)+(a*sqr(y)))
and a=-1(+sqr(e))
To find the perpendicular of this curve:

$$-dy/dx = -z*sqr(r+z)/y*(2*z*(r+z)-(a*sqr(y)))$$

This allows calculation of angles A and B:

$$A = tan^{-1}(-dy/dx)$$

$$B = sin^{-1}(sin(A)/Ri)$$

where x = sagittal depth of front curve at position Y
y = position Y
Ri = refractive index of the contact lens material; and
the calculation of angles C and D:

$$C = tan^{-1}(-dy_1/dx_1)-(tan^{-1}(-dy/dx)-B);$$

$$D = sin^{-1}(Ri*sin(C))$$

where $x_1$ = sagittal depth of back curve at position Y

$y_1$ = position Y (note that the position Y on the back surface is calculated from the angle B and the thickness of the lens using an iterative method).

The calculation of angle E and focal length (L) comprises:

$$E = \tan^{-1}(-dy_1/dx_1) - D$$

$$L = y/\tan(E)$$

where $x_1$ = sagittal depth of back curve at position Y

$y_1$ = position Y

The calculation of back vertex power (BVP) comprises:-

BVP = 1000/L

The calculation is repeated for all values of Y up to FOZD/2

Step (c) of the method follows and entails:-

(c) determining the profile of the power map for the lens or each incremental part thereof;

Using a memory device, store all values of BVP at incremental distances within the lens optical area or incremental section thereof;

Step (d) comprises:

(d) using an iterative process to estimate the necessary profile of each incremental part of the front surface and repeating steps (b) and (c) until the profile of the power map corresponds to a desired profile and accuracy.

The front eccentricity value and front radius of the lens or each incremental part is adapted in an iterative process, then the process is repeated until the profile of the power map corresponds to the desired profile.

The previous equations may be extended to incorporate the additional refracting surfaces of the eye, which include the tear lens, cornea, aqueous humour, crystalline lens and vitreous humour. This will allow for the control of power at each part of the contact lens in the complete lens eye system. The shape of the tear lens is determined by the back surface of the contact lens and the front of the cornea (which is typically measured by the practitioner, using keratometry). For a flexible lens, any drape of the lens is taken into account. The thickness of the tear layer is estimated from the geometrical point of contact between the lens and the cornea (typically in the range 5-10μm). For the purposes of the determining the geometry of the other refractive surfaces within the eye, a modified schematic of the Gullstrand number 1/2 model or the Le Grand model may be used.

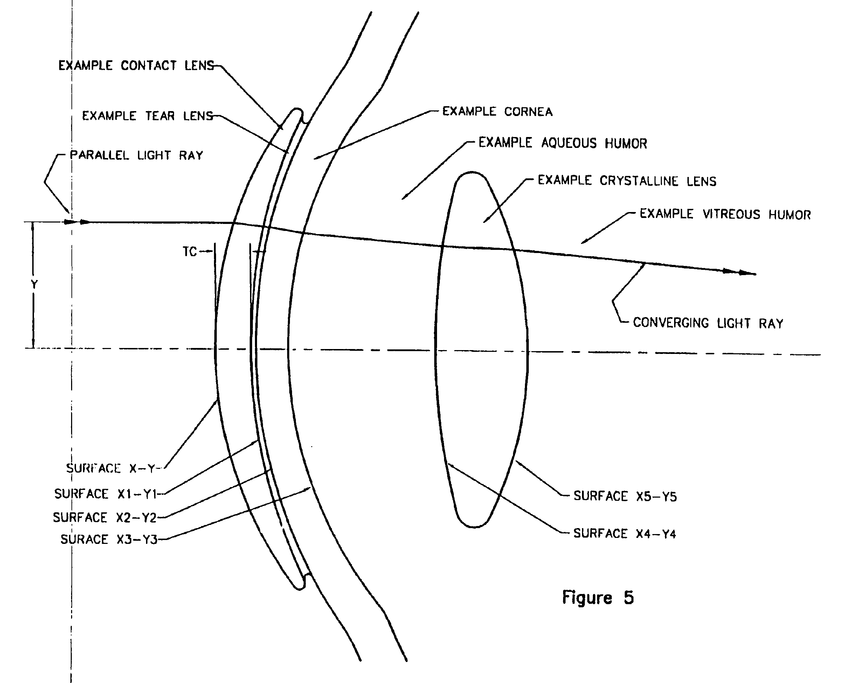

With reference to Figure 5, and to the preceding calculations, the calculation of angle D is modified such that:

$$D - \sin^{-1}(Ri_{ci}\sin(C)/Ri_1)$$

With reference to Figure 5, the incident and refractive angles of the light ray at the refractive surfaces in the eye are as follows:

$$F = \tan^{-1}(-dy_n/dx_n) - (\tan^{-1}(-dy_{n-1}/dx_{n-1}) - D$$

$$G = \sin^{-1}(Ri_n\sin(F)/Ri_{n+1})$$

Where

D = previous angle of refraction

F = angle of incidence

G = new angle of refraction

$x_{n-1}$ = sagittal depth of previous refracting surface at position Y

$y_{n-1}$ = previous position Y having been adjusted in relation to the angle of the incident ray.

$x_n$ = sagittal depth of refracting surface at position Y

$y_n$ = position Y having been adjusted in relation to the angle of the incident ray and the distance the ray has travelled.

$Ri_n$ = refractive index of the incident medium

$Ri_{n+1}$ = refractive index of the refracting medium

This is repeated through all refracting surfaces of the eye indicated on Figure 5.

The calculation of angle E and focal length (L) is as follows:

$$E = G - \tan^{-1}(-dy_s/dx_s)$$

$$L = y/\tan(E) + \text{distance from the cornea to the final refracting surface}$$

Where

x = sagittal depth of the final refracting surface

y = position Y having been adjusted in relation to the angle of the incident ray

The calculation of back vertex power (BVP) is then consistent with the equations detailed previously.

According to a preferred feature of the invention, the iterative process to calculate the shape of the front curve imparted to the front surface contact lens may or may not be limited to either one or a series of aspheric curves described using the equation:

$$x = sqr(y)/(r + sqrt(sqr(r) + (a*sqr(y)))),$$

but impart either one or a series of polynomial equations as follows:

(e) defining an initial node position as a position on the front of the lens;

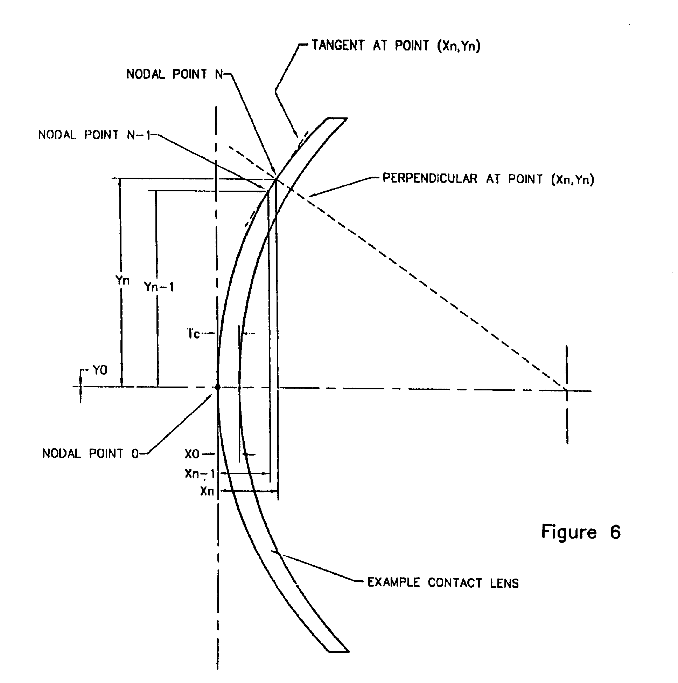

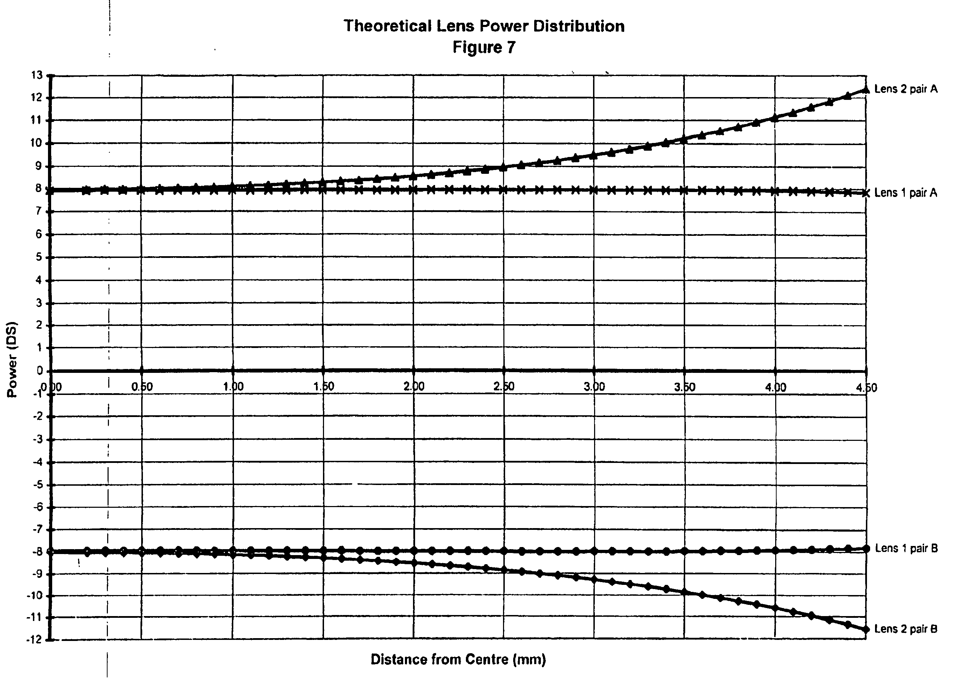

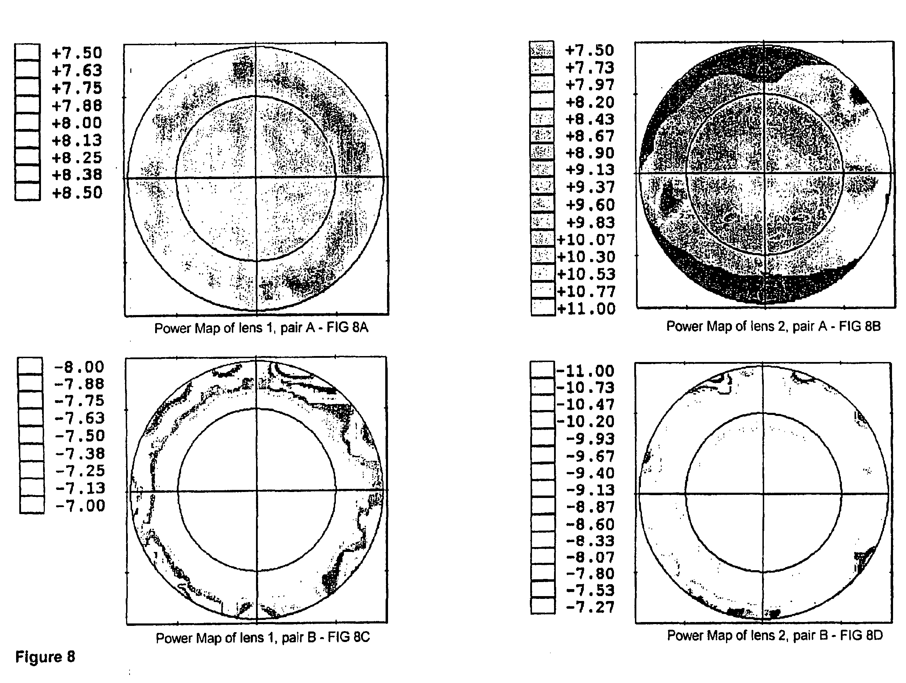

With reference to Figure 6, at an incremental distance from the central axis through the contact lens, define nodes $x_0, y_0, x_1, y_1$,

Where

$x_0 = -Tc$

$y_0 = 0$

$x_1 = -Tc$

$y_1$ = incremental distance from the central axis

Tc = Centre thickness of the lens

(f) simulating the passage of parallel, or exceptionally non parallel, incident light rays through the lens, taking into account the back surface geometry of the lens, at an incremented distance, adjusting the node position on the front surface of the lens, either closer or further away from the back surface of the lens, to a position which allows the refracted light rays to pass through the optical axis at the position indicated by the chosen defined power map;

In reference to Figure 6, the path of the parallel incident light ray is calculated using the previous equations for determining the angle of incidence and refraction where:

for example $dy/dx = (Y_n/Y_{n-1})/(x_n/x_{n-1})$

An iterative process is used to adjust the position of $X_n$ until the resulting value for BVP is equal to the desired power profile at incremental distance y from the central optical axis of the contact lens. The value for $x_n$ is stored against value $y_n$ in a memory device.

(g) defining a new node position on the front surface of the lens at a distance incremented from the previous node position;

Where

$x_n = x_{n-1}$

$y_n$ is incremented

(h) repeating stages (f) and (g) until all selected nodal positions have been calculated to cover the desired area of the lens; and

Where $y_n$=FOZD/2

(i) using a mathematical fitting procedure, such as a polynomial curve fitting procedure, to fit a mathematical equation to the defined nodal positions.

Define a polynomial equation to the stored values of $x_0$ to $x_n$ against the incremented values of $y_0$ to $y_n$ using standard best fit criteria.

An iterative process is used to determine the order of the polynomial equation necessary to describe the nodal points $x_0$ to $x_n$ against the incremented values of $y_0$ to $y_n$ to the accuracy required by the manufacturing process. Preferably, the polynomial equation must describe the position of the nodal points to an accuracy of $\pm\ 2\mu$m, more preferably to an accuracy of $\pm\ 1\mu$m and most preferably to an accuracy of $\pm\ 0.5\mu$m.

According to yet another preferred feature of the invention, the shape imparted to the front surface of a flexible lens is compensated for the action of the contact lens draping on the surface of the eye.

Using the standard equation of a curve with asphericity, the back surface of the contact lens is described:-

$$y = x^2/r\text{-}sqrt(r^2\text{-}ax^2)$$

where a = measure of asphericity of the curve.

By using shape change factors $t_y$ and $t_x$, the above equation is adapted such:

$$y'/t_y = x'^2/t_x^2/r\text{-}sqrt(r^2\text{-}ax'^2/t_x^2)$$

therefore

$$y' = x'^2/r'\text{-}sqrt(r'^2\text{-}a'x'^2)$$

where

$r' = rt_x^2/t_y$

$a' = at_x^2/t_y^2$

The shape change factors $t_y$ and $t_x$ are determined for a flexible lens where:

r = radius of the standard cornea

a = asphericity of the standard cornea

r' = radius of the back surface of the flexible contact lens

a' = aspericity of the back surface of the flexible contact lens

The shape change factors $t_y$ and $t_x$ are applied directly to the polynomial equation describing the front surface of the flexible contact lens.

When determining the front and back curve radii and asphericity of the contact lens when the material that the contact lens is manufactured from is in a state of pre-hydration, the determination of the shape change factors $t_x$ and $t_y$ in this instance correspond respectively to the axial and the radial expansion factors of the material.

## Example 2

Again making reference to Figure 1, examples of contact lenses having aspheric front surfaces in accordance with the invention are given below. The contact lenses manufactured in accordance with the invention, having substantially uniform focal power across substantially the entire optic area, are aplanatic lenses corrected for induced spherical aberration, and are now referred to as such. These aplanatic lenses are compared with non-aplanatic contact lenses computed conventionally and having spherical front surfaces.

Thus, two lens pairs A and B each having aplanatic lens 1 and non-aplanatic, standard lens 2 are compared:-

|  | Lens Pair A | | Lens Pair B | |
|---|---|---|---|---|
|  | Lens 1 | Lens 2 | Lens 1 | Lens 2 |
| BOZR | 8.00 | 8.00 | 8.00 | 8.00 |
| TD | 9.50 | 9.50 | 9.50 | 9.50 |
| FOZD | 8.00 | 8.00 | 8.00 | 8.00 |
| FOZR | 7.21 | 7.21 | 9.21 | 9.21 |
| BVP | + 8.00 | + 8.00 | - 8.00 | - 8.00 |
| Tc | 0.35 | 0.32 | 0.14 | 0.14 |
| Fel | 0.471 | 0.00 | - 0.627 | 0.00 |
| Aplanatic | Yes | No | Yes | No |

The lenses were manufactured using standard materials (PMMA - polymethyl methacrylate) and standard contact lens lathe cutting equipment and measured using a Visionix VC2001 lens mapping system,

Figure 7 shows the theoretical or predicted power distributions over the useful, optic areas of the lenses of pair A (at the top) and pair B (below). The graphs plot focal power (DS) against distance from the lens centre in mm and it can readily be seen that, for each pair, lens 1, the aplanatic lens, theoretically has a uniform power distribution over the useful optic area, whilst in each case lens 2, the non-aplanatic lens, shows a focal power increasing or decreasing from the power at the centre of the lens.

Figures 8A to 8D are power distribution maps for contact lenses 1 and 2 of pairs A and B, obtained subsequent to manufacture. Each map is associated with a key in the form of focal power scale.

The inner circle in each map defines the useful, optic area of the lens, and it can readily be seen that, for each pair, within these areas, lens 1 of the pair has substantially uniform focal power relative to lens 2.

In conclusion, the invention as described enables contact lenses to be manufactured with substantially constant focal power across a desired diameter; applies to all designs of contact lenses, whichever manufacturing process is used, without altering the fitting characteristics of the lens; offers significant clinical and commercial advantages; and enables contact lenses to be manufactured using standard equipment, of all modalities and techniques, and therefore does not increase running costs of manufacture.

**Claims**

1. A method of making a contact lens, comprising the steps of: calculating the shape of an aspheric curve to be imparted to the front surface of the lens in order to provide a desired focal power profile over the optic region of a monofocal or multifocal contact lens, by: -

    (a) estimating the required shape of the front surface of the lens in order to achieve an estimated shape using standard or adapted thin lens formulae;
    (b) calculating the focal power of the lens having the estimated shape, by simulating the passage of parallel, or exceptionally non parallel, incident light rays through the lens at points at incremental distances from the optical axis of the lens, in order to produce a power map of the lens:
    (c) determining the profile of the power map for the lens;
    (d) using an iterative process to estimate the necessary shape of the front surface by repeating steps (b) and (c) until the profile of the power map corresponds to the desired profile and to a desired accuracy,

    wherein the contact lens is manufactured from a material which exhibits non-isotropic shape changing properties such as expansion or shrinkage, and calculating the necessary shape change function from the non-isotropic material properties of the lens, and incorporating the change in conic eccentricity of the lens surfaces where applicable, and applying the shape change function to the profile derived in step (d).

2. A method according to claim 1, wherein step (b) includes simulating the passage of light through the lens eye system, including the refractive surfaces within the lens eye system such as the tear layer, cornea, aqueous humour, crystalline lens and vitreous humour.

3. A method according to claim 2, wherein the optical properties of the refractive surfaces are changed as a result of the inclusion of optical medical devices implanted into or onto the eye.

4. A method according to claim 1, wherein step (c) includes representing the desired power map as a mathematical equation or series of equations.

5. A method according to claim 4, wherein the mathematical equation or series of equations are a polynomial equation or series of polynomial equations.

6. A method according to any of the preceding claims, wherein step 1(d) comprises:

(e) defining an initial point as a point on the front of the lens;
(f) simulating the passage of parallel, or exceptionally non-parallel, incident light rays through the lens, taking into account the back surface geometry of the lens, at an incremented distance, adjusting the point on the front surface of the lens, either closer or further away from the back surface of the lens, to a position which allows the refracted light rays to pass through the optical axis at the position indicated by the chosen defined power map;
(g) defining a new point on the front surface of the lens at a distance incremented from the previous point;
(h) repeating stages (f) and (g) until all selected points have been calculated to cover the desired area of the lens; and
(i) using a mathematical fitting procedure, such as a polynomial curve fitting procedure, to fit a mathematical equation to the defined points.

7. A method according to claims 5 and 6, and including determining the accuracy of the machining equipment and manufacturing process used to manufacture the lens and, at incremental values, relating the mathematical equation derived at claim 5 or 6(i) to the actual point and investigating whether the points are within the previously determined accuracy of the machining equipment and manufacturing process, and increasing the polynomial order of the mathematical equation until the points are within said accuracy.

8. A method according to any of the preceding claims, where the contact lens is considered flexible, such as a soft hydrogel or silicon lens, and calculating a shape change function from the difference between the back surface shape of the lens and the resultant shape of the back surface of the lens once in situ on the eye, and incorporating the change in conic eccentricity of the back surface of the contact lens where applicable, and applying the shape change function to the derived mathematical equation defining the front geometry of the lens.

**Patentansprüche**

1. Ein Verfahren zur Herstellung einer Kontaktlinse, das folgende Schritte umfasst: die Form einer aspärischen Kurve zu berechnen, die auf die vordere Oberfläche der Linse übertragen werden soll, um ein gewünschtes Brechkraft-Profil über den optischen Bereich einer monofokalen oder multifokalen Kontaktlinse zu erreichen, indem:

(a) die erforderliche Form der vorderen Oberfläche der Linse geschätzt wird, um eine geschätzte Form durch die Verwendung von Standardformeln oder adaptierten Formeln für dünne Linsen zu erreichen;
(b) die Brechkraft der Linse mit der geschätzten Form berechnet wird durch Simulieren des Durchgangs von parallel oder ausnahmsweise nicht parallel einfallenden Lichtstrahlen durch die Linse hindurch an Punkten mit wachsenden Abständen von der optischen Achse der Linse, um ein Brechkraft-Abbild der Linse zu erstellen;
(c) das Profil des Brechkraft-Abbildes für die Linse bestimmt wird;
(d) ein iterativer Prozess eingesetzt wird, um die erforderliche Form der vorderen Oberfläche zu schätzen, und zwar durch Wiederholen der Schritte (b) und (c), bis das Profil des Brechkraft-Abbildes dem gewünschten Profil und einer gewünschten Genauigkeit entspricht,

**dadurch gekennzeichnet, dass** die Kontaktlinse aus einem Material hergestellt ist, das nicht-isotrope Formänderungs-Eigenschaften aufweist, wie etwa Ausdehnung oder Schrumpfung, und wobei die erforderliche Formänderungs-Funktion aus den nicht-isotropen Materialeigenschaften der Linse berechnet wird, und wobei die Veränderung der konischen Exzentrizität der Linsenflächen, wo zutreffend, eingearbeitet wird, und wobei die Formänderungs-Funktion auf das in Schritt (d) abgeleitete Profil angewendet wird.

2. Ein Verfahren nach Anspruch 1, **dadurch gekennzeichnet, dass** Schritt (b) das Simulieren des Durchgangs von

**EP 1 151 345 B1**

Licht durch das Augenlinsensystem umfasst, einschließlich der refraktiven Oberflächen innerhalb des Augenlinsensystems, wie beispielsweise Tränenschicht, Hornhaut, Kammerwasser, kristalline Linse und Glaskörperflüssigkeit.

3. Ein Verfahren nach Anspruch 2, **dadurch gekennzeichnet, dass** die optischen Eigenschaften der refraktiven Oberflächen infolge der Einbeziehung von optischmedizinischen Mitteln geändert werden, die in oder auf das Auge implantiert werden.

4. Ein Verfahren nach Anspruch 1, **dadurch gekennzeichnet, dass** Schritt (c) die Darstellung des gewünschten Brechkraft-Abbildes als mathematische Gleichung oder als Reihe von mathematischen Gleichungen umfasst.

5. Ein Verfahren nach Anspruch 4, **dadurch gekennzeichnet, dass** die mathematische Gleichung eine Polynom-Gleichung ist oder die Reihe von mathematischen Gleichungen eine Reihe von Polynom-Gleichungen ist.

6. Ein Verfahren nach einem der vorstehenden Ansprüche, **dadurch gekennzeichnet, dass** der Schritt 1(d) umfasst:

(e) einen Punkt auf der Vorderfläche der Linse als Anfangspunkt zu definieren;
(f) den Durchgang von parallel oder ausnahmsweise nicht parallel einfallenden Lichtstrahlen durch die Linse zu simulieren und dabei die Geometrie der rückwärtigen Oberfläche der Linse zu berücksichtigen, in wachsendem Abstand, wobei der Punkt auf der Vorderfläche der Linse entweder näher zu oder entfernter von der rückwärtigen Oberfläche der Linse in einer solchen Stellung eingestellt wird, dass die gebrochenen Lichtstrahlen durch die optische Achse an der Stelle hindurchgehen, die von dem gewählten definierten Brechkraft-Abbild angezeigt wird;
(g) einen neuen Punkt auf der Vorderfläche der Linse in einem größeren Abstand zu dem vorigen Punkt zu definieren;
(h) die Schritte (f) und (g) zu wiederholen, bis alle gewählten Punkt so berechnet sind, dass sie die gewünschte Linsenfläche abdecken; und
(i) ein mathematisches Anpassverfahren zu verwenden, wie etwa ein Polynomkurven-Anpassverfahren, um eine mathematische Gleichung an die definierten Punkte anzupassen.

7. Ein Verfahren nach Anspruch 5 und 6, ebenso umfassend die Bestimmung der Genauigkeit der Bearbeitungsgeräte und des Herstellungsverfahrens, das für die Herstellung der Linse eingesetzt wird, sowie, mit ansteigenden Werten, die Anwendung der in Anspruch 5 oder 6(i) abgeleiteten mathematischen Gleichung auf den betreffenden Punkt und die Prüfung, ob die Punkte innerhalb der zuvor bestimmten Genauigkeit der Bearbeitungsgeräte und des Herstellungsverfahrens liegen, sowie die Erhöhung der Polynom-Ordnung der mathematischen Gleichung, bis die Punkte innerhalb dieser Genauigkeit liegen.

8. Ein Verfahren nach jedem der vorhergehenden Ansprüche, **dadurch gekennzeichnet, dass** die Kontaktlinse als biegsam betrachtet wird, wie etwa eine weiche Hydrogel- oder Silikonlinse, und dass eine Formänderungs-Funktion berechnet wird aus der Differenz zwischen der Form der rückwärtigen Fläche der Linse und der sich ergebenden Form der rückwärtigen Fläche der Linse, wenn sie in situ auf dem Auge sitzt, und dass die Änderung der konischen Exzentrizität der rückwärtigen Fläche der Kontaktlinse, wo anwendbar, einbezogen wird, und dass die Formänderungs-Funktion auf die abgeleitete mathematische Gleichung angewandt wird, die die Vorderflächen-Geometrie definiert.

**Revendications**

1. Procédé de fabrication d'une lentille de contact, comportant les étapes consistant à : calculer la forme d'une courbe asphérique à donner à la surface avant de la lentille afin de créer un profil de puissance focale voulu sur la zone optique d'une lentille de contact à foyer simple ou multiple, en :

(a) estimant la forme requise de la surface avant de la lentille afin d'obtenir une forme estimée en utilisant une formule de lentille mince standard ou adaptée,
(b) calculant la puissance focale de la lentille ayant la forme estimée, en simulant le passage de rayons lumineux incidents parallèles, ou exceptionnellement non parallèles, à travers la lentille sur des points situés à des distances incrémentales de l'axe optique de la lentille, afin de produire une carte de puissance de la lentille,
(c) déterminant le profil de la carte de puissance pour la lentille,
(d) utilisant un processus itératif pour estimer la forme nécessaire de la surface avant en répétant les étapes (b) et (c) jusqu'à ce que le profil de la carte de puissance corresponde au profil voulu et à une précision voulue,

dans lequel la lentille de contact est fabriquée à partir d'un matériau qui présente des propriétés anisotropes de changement de forme telles qu'une dilatation ou un retrait, et calculer la fonction de changement de forme nécessaire à partir des propriétés de matériau anisotropes de la lentille, et incorporer le changement d'excentricité conique des surfaces de lentille lorsque cela est applicable, et appliquer la fonction de changement de forme au profil trouvé à l'étape (d).

2. Procédé selon la revendication 1, dans lequel l'étape (b) inclut une simulation du passage de lumière à travers le système oculaire de lentille, y compris les surfaces réfringentes à l'intérieur du système oculaire de lentille telles que la couche lacrymale, la cornée, l'humeur aqueuse, le cristallin et l'humeur vitrée.

3. Procédé selon la revendication 2, dans lequel les propriétés optiques des surfaces réfringentes sont changées en résultat de l'inclusion de dispositifs médicaux optiques implantés dans l'oeil ou sur celui-ci.

4. Procédé selon la revendication 1, dans lequel l'étape (c) inclut une représentation de la carte de puissance voulue sous la forme d'une équation mathématique ou d'une série d'équations.

5. Procédé selon la revendication 4, dans lequel l'équation mathématique ou la série d'équations sont une équation polynomiale ou une série d'équations polynomiales.

6. Procédé selon l'une quelconque des revendications précédentes, dans lequel l'étape 1 (d) comporte les étapes consistant à :

(e) définir un point initial comme un point sur l'avant de la lentille,
(f) simuler le passage de rayons lumineux incidents parallèles, ou exceptionnellement non parallèles, à travers la lentille, en tenant compte de la géométrie de surface arrière de la lentille, à une distance incrémentée, ajuster le point sur la surface avant de la lentille, en le rapprochant ou en l'éloignant de la surface arrière de la lentille, jusqu'à une position qui permet aux rayons lumineux réfractés de passer à travers l'axe optique à la position indiquée par la carte de puissance définie choisie,
(g) définir un nouveau point sur la surface avant de la lentille à une distance incrémentée par rapport au point précédent,
(h) répéter les étapes (f) et (g) jusqu'à ce que tous les points sélectionnés aient été calculés pour couvrir l'aire voulue de la lentille, et
(i) utiliser un procédé d'adaptation mathématique, tel qu'un procédé d'ajustement de courbe polynomiale, pour adapter une équation mathématique aux points définis.

7. Procédé selon les revendications 5 et 6, et incluant la détermination de la précision de l'équipement d'usinage et du procédé de fabrication utilisé pour fabriquer la lentille et, à des valeurs incrémentales, relatives à l'équation mathématique trouvée à la revendication 5 ou 6(i) jusqu'au point actuel et rechercher si les points sont dans les limites de la précision précédemment déterminée de l'équipement d'usinage et du procédé de fabrication, et augmenter l'ordre polynomial de l'équation mathématique jusqu'à ce que les points soient dans les limites de ladite précision.

8. Procédé selon l'une quelconque des revendications précédentes, dans lequel la lentille de contact est considérée flexible, telle qu'une lentille en silicone ou en hydrogel souple, et comportant les étapes consistant à calculer une fonction de changement de forme à partir de la différence entre la forme de surface arrière de la lentille et la forme résultante de la surface arrière de la lentille une fois in situ sur l'oeil, et incorporer le changement d'excentricité conique de la surface arrière de la lentille de contact lorsque cela est applicable, et appliquer la fonction de changement de forme à l'équation mathématique trouvée définissant la géométrie avant de la lentille.

Figure 1

Figure 2

TANGENT AT POINT (X,Y)

PERPENDICULAR AT POINT (X,Y)

FOZR WITH ECCENTRICITY (E)

Y

X

Figure 3

EP 1 151 345 B1

PARALLEL LIGHT RAY

EXAMPLE CONTACT LENS

EXAMPLE TEAR LENS

CONVERGING LIGHT RAY

PERPENDICULAR

B

C

D

PERPENDICULAR

TC

FOCAL LENGTH (L)

EXAMPLE TEAR LENS

EXAMPLE CONTACT LENS

F D G

DETAIL SHOWING
LIGHT REFRACTION IN
TEAR LENS

Figure 4

EP 1 151 345 B1

Figure 5

Figure 6

EP 1 151 345 B1

Theoretical Lens Power Distribution
Figure 7

Figure 8